# EUROPÄISCHE PATENTSCHRIFT

(11) **EP 3 438 472 B1**
(45) Veröffentlichungstag und Bekanntmachung des Hinweises auf die Patenterteilung: **24.01.2024**
(21) Anmeldenummer: 18181098.7
(22) Anmeldetag: 02.07.2018
(51) Int. Cl.: F16B 5/02, F02F 7/00, F16F 15/04, F16B 43/00

(54) **ANORDNUNG ZUR VERBINDUNG VON GEHÄUSETEILEN MITTELS SCHRAUBEN**
ARRANGEMENT FOR CONNECTING HOUSING PARTS BY MEANS OF SCREWS
DISPOSITIF DE RACCORDEMENT DES PARTIES DU BOÎTIER À L'AIDE DES VIS

(30) Priorität: 04.08.2017 DE 102017213556
(43) Veröffentlichungstag der Anmeldung: 06.02.2019
(73) Patentinhaber: ZF Friedrichshafen AG, 88046 Friedrichshafen (DE)
(72) Erfinder: Brilka, Tobias, 94034 Passau (DE); Hoffmann, Thorsten, 94518 Spiegelau (DE)
(74) Vertreter: ZF Friedrichshafen AG

(56) Entgegenhaltungen:
- DE-A1-102011 105 492
- DE-A1-102014 007 213
- DE-U- 7 342 154
- US-A- 2 761 484
- US-A1- 2010 202 856
- US-A1- 2014 260 783

## Beschreibung

Die Erfindung betrifft eine Gesamtheit, bestehend aus einer Anordnung zur Verbindung von mindestens zwei Gehäuseteilen eines Gehäuses oder Bauteils mittels mindestens einer Schraube, den mindestens zwei Gehäuseteilen, der mindestens einen Schraube und mindestens einem Dämpfungsglied, nach dem Oberbegriff des Patentanspruches 1.

Es ist bekannt, dass Gehäuseteile, beispielsweise von Getriebe- oder Motorengehäusen mittels Schrauben miteinander verbunden werden, d. h. über bekannte Schraubenverbindungen. Insbesondere bei längeren Schrauben, z. B. Zuganker- oder Dehnschrauben kann es durch Schwingungsanregung aus dem Gehäuse vorkommen, dass auch die Schrauben in Schwingungen geraten, wobei diese insbesondere Transversalschwingungen zwischen den Einspannstellen ausführen. Kritisch kann diese Schwingungsbeanspruchung werden, wenn die Schwingungen in der Biegeeigenfrequenz der Schraubenschäfte angeregt werden, wodurch es zu gefährlichen Resonanzerscheinungen kommen kann.

Eine Lösung dieses Problems wurde durch die DE 197 29 971 C1 bekannt, und zwar für ein Motorengehäuse, dessen Gehäuseteile über Zuganker miteinander verspannt sind. Die Zuganker sind in Durchgangsbohrungen der Gehäuseteile angeordnet, wobei zwischen Zuganker und der Durchgangsbohrung ein Ringspalt belassen ist. Zur Dämpfung von Schwingungen der Zuganker sind die Ringspalte jeweils mit einem Öl, insbesondere Schmieröl gefüllt.

Aus der US 2010/202856 A1 ist eine Anordnung zum Verbinden von zwei Werkstücken bekannt, wobei die Anordnung eine Isolation bzgl. der Übertragung von Wärme und Vibrationen gewährleistet. Die Anordnung besteht aus einem Bolzen mit einem Kopfabschnitt und einem Schaftabschnitt sowie aus zwei zusammenpressbaren Elementen. Jedes der zusammenpressbaren Elemente besteht seinerseits aus einer zylindrisch-stufenförmigen Gummitülle mit einer Durchgangsöffnung und einer sich nach innen erstreckenden Lippe. Ein erstes der zusammenpressbaren Elemente ist dabei zwischen dem Kopfabschnitt des Bolzens und einem ersten Werkstück angeordnet und ein zweites der zusammenpressbaren Elemente ist an einer Verbindungsstelle des ersten Werkstücks mit dem zweiten Werkstück angeordnet.

Die DE 73 42 154 U offenbart eine Schraubverbindung, welche einen oberen und einen unteren Lagerdeckel miteinander verbindet. Die Schraube ist dabei durch eine Ausnehmung der Lagerdeckel geführt, so dass ein Ringspalt besteht. Die Ausnehmung ist weiterhin durch zwei Spannstellen begrenzt. Um ein Schwingen der Schraube zu vermeiden, wird der Ringspalt vollständig mit einem zähen Schaumstoff ausgeschäumt.

Die US 2014/0260783 A1 offenbart eine weitere Schraubverbindung.

Eine Aufgabe der vorliegenden Erfindung besteht darin, geeignete Mittel zur Dämpfung von Schraubenschwingungen bei Schraubenverbindungen für Gehäuse vorzuschlagen.

Die Erfindung umfasst die Merkmale des Patentanspruches 1.

Erfindungsgemäß ist vorgesehen, dass innerhalb des Ringspaltes ein ringförmiges Dämpfungsglied angeordnet ist, welches den Ringspalt ausfüllt, so dass es sowohl mit dem Schraubenschaft als auch mit der Wandung der Durchgangsbohrung in Kontakt ist. Durch das Dämpfungsglied werden Auslenkungen des Schraubenschaftes gedämpft, d. h. die Querbewegung des Schraubenschaftes wird durch das Dämpfungsglied gebremst. Damit wird die Amplitude der Transversalschwingungen reduziert und damit die Beanspruchung der Schraube verringert.

Erfindungsgemäß ist das Dämpfungsglied aus einem Elastomer herstellbar, d. h. aus einem festen, praktisch nicht komprimierbaren, jedoch elastisch verformbaren Werkstoff mit dämpfenden Eigenschaften hergestellt. Bei einer Transversalschwingung des Schraubenschaftes weicht das Elastomer der Radialbewegung aus, indem es sich elastisch verformt und der Verformung gleichzeitig eine Rückstellkraft entgegensetzt, welche dämpfend wirkt.

Erfindungsgemäß ist das Dämpfungsglied als Gummiring ausgebildet, welcher als Spritzteil einfach herstellbar und montierbar ist. Der Werkstoff Gummi, herstellbar aus natürlichem oder synthetischem Kautschuk, gehört zur Gruppe der Elastomere und besitzt ähnliche Eigenschaften wie diese.

Erfindungsgemäß ist das Dämpfungsglied etwa in der Mitte zwischen den beiden Spannstellen oder Spannebenen, welche die Durchgangsbohrung begrenzen, angeordnet, d. h. an der Stelle, wo die maximale Amplitude bei Auftreten von Transversalschwingungen zu erwarten ist. Damit wird durch ein kleines Teil wie das Dämpfungsglied eine maximale Dämpfungswirkung erzielt.

Erfindungsgemäß ist innerhalb des Ringspalts zwischen dem Dämpfungsglied und der ersten Spannebene oder zwischen dem Dämpfungsglied und der ersten und der zweiten Spannebene jeweils eine Hülse angeordnet, welche sich stirnseitig am Dämpfungsglied abstützt und dieses in axialer Richtung des Ringspalts positioniert und fixiert. Mit ihrer anderen Stirnseite ist die Hülse in der Spannebene gegenüber dem zu verbindenden Gehäuseteil abgestützt. Es können somit entweder eine oder zwei Hülsen für die Fixierung des Dämpfungsgliedes vorgesehen sein.

Erfindungsgemäß ist die Durchgangsbohrung als Stufenbohrung ausgebildet und weist einen Absatz auf, an welchem das Dämpfungsglied anliegt. Auf der anderen Seite ist das Dämpfungsglied über eine Hülse abgestützt. Somit ist für die Positionierung und Fixierung des Dämpfungsgliedes nur eine Hülse, d. h. nur ein zusätzliches Teil erforderlich.

Erfindungsgemäß ist das Dämpfungsglied zwischen zwei Hülsen oder einer Hülse und dem Absatz gequetscht, d. h. das Dämpfungsglied wird bei der Montage um einen definierten Betrag gestaucht, wodurch es sich in seinem Außendurchmesser vergrößert und in seinem Innendurchmesser verkleinert mit der Folge, dass der Schraubenschaft durch das ringförmige Dämpfungsglied elastisch eingespannt ist. Bei der geringsten Radialbewegung des Schraubenschaftes wird diese sofort durch eine elastische Rückstellkraft gebremst und damit gedämpft.

Ausführungsbeispiele der Erfindung sind in der Zeichnung dargestellt und werden im Folgenden näher beschrieben, wobei sich aus der Beschreibung und/oder der Zeichnung weitere Merkmale und/oder Vorteile ergeben können. Es zeigen
- Fig. 1: eine erfindungsgemäße Schraubenverbindung mit einem Dämpfungsglied für ein Gehäuse,
- Fig. 1a: eine Einzelheit E aus Fig. 1 mit dem Dämpfungsglied und
- Fig. 2: ein weiteres Ausführungsbeispiel der Erfindung für eine Schraubenverbindung mit Dämpfungsglied.

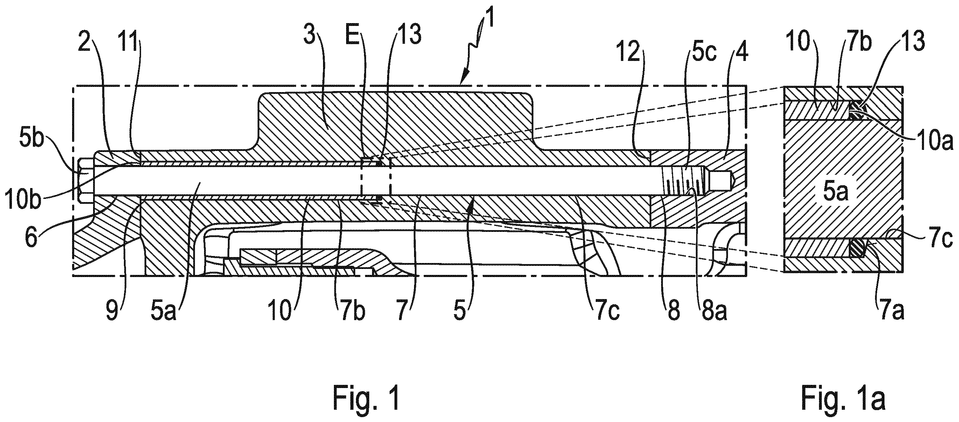

Fig. 1 zeigt einen Ausschnitt eines Gehäuses 1, welches aus drei Gehäuseteilen 2, 3, 4 besteht, welche durch eine Schraube 5, auch Schraubbolzen 5 genannt, miteinander verbunden sind. Die Schraube 5 weist einen Schraubenschaft 5a, einen Schraubenkopf 5b und einen Gewindeabschnitt 5c auf. Das Gehäuse 1 kann ein Getriebegehäuse, ein Pumpengehäuse oder auch ein Motorgehäuse sein, welche zu Schwingungen anregen können. Das erste Gehäuseteil 2, ein Deckelteil 2, weist eine Durchgangsbohrung 6, und das zweite Gehäuseteil 3, ein mittleres Gehäuseteil 3, weist eine als Stufenbohrung 7 ausgebildete Durchgangsbohrung 7 mit einem Absatz 7a (Fig. 1a) auf, welcher den größeren Durchmesser 7b mit dem kleineren Durchmesser 7c der Stufenbohrung 7 verbindet. Das dritte Gehäuseteil 4, ein Bodenteil 4, weist eine Sacklochbohrung 8 mit einem Innengewinde 8a auf, in welche der Gewindeabschnitt 5c des Schraubbolzens 5 eingeschraubt ist. Wie aus der Zeichnung ersichtlich, weist der Schraubbolzen 5 eine relativ große Länge, bedingt durch die Abmessung des mittleren Gehäuseteils 3, auf und wird daher auch als Zuganker 5 bezeichnet. Der größere Durchmesser 7b der Stufenbohrung 7 bildet mit dem Umfang des Schraubenschaftes 7a einen Ringspalt 9, in welchen eine Hülse 10, auch Rohrstück 10 genannt, eingesetzt ist. Zwischen dem ersten Gehäuseteil 2 und dem zweiten Gehäuseteil 3 ist eine erste Spannebene 11, auch Spannstelle 11 genannt, und zwischen dem zweiten Gehäuseteil 3 und dem dritten Gehäuseteil 4 ist eine zweite Spannebene 12, auch Spannstelle 12 genannt, angeordnet. Zwischen dem Absatz 7a (Fig. 1a) und einer ersten Stirnseite 10a (Fig. 1a) der Hülse 10 ist ein als Gummiring 13 ausgebildetes Dämpfungsglied 13 angeordnet, welches zwischen dem Absatz 7a (Fig. 1a) und der ersten Stirnseite 10a (Fig. 1a) der Hülse 10 eingespannt, d. h. um ein definiertes Maß gequetscht ist. Die zweite Stirnseite 10b der Hülse 10 stützt sich im Bereich der ersten Spannebene 11 am ersten Gehäuseteil 2 ab.

Fig. 1a zeigt eine Einzelheit E aus Fig. 1, d. h. den Bereich um den Gummiring 13 respektive das Dämpfungsglied 13 in vergrößerter Darstellung. Die Hülse 10 drückt mit ihrer ersten Stirnseite 10a auf den Gummiring 13, der sich seinerseits an dem Absatz 7a zwischen dem größeren Durchmesser 7b und dem kleineren Durchmesser 7c abstützt. Die Fläche des Absatzes 7a ist vorzugsweise rechtwinklig zur Längsachse des Schraubenschaftes 5a angeordnet, also als Planfläche 7a ausgebildet, kann aber auch leicht konisch verlaufen, so dass eine radial nach innen gerichtete Kraftkomponente auf den Gummiring 13 wirkt. Dieser wird aufgrund der Einspannung zwischen Hülse 10 und Absatz 7a derart gequetscht, dass sich sein Innendurchmesser verringert und mit einer radialen Anpresskraft am Außenumfang des Schraubenschaftes 5a anliegt.

Die Montage des Dämpfungsgliedes respektive des Gummiringes 13 und der Hülse 10 wird wie folgt durchgeführt: Zunächst wird der Gummiring 13, der vor der Montage einen etwa kreisförmigen Querschnitt aufweist, über den größeren Durchmesser 7b in die Stufenbohrung 7 eingeführt und am Absatz 7a platziert. Anschließend wird die Hülse 10 in den Ringspalt 9 eingesetzt, so dass sie mit ihrer ersten Stirnseite 10a am Gummiring 13 anliegt. Bevor das erste Gehäuseteil 2 auf das zweite Gehäuseteil 3 aufgesetzt wird, steht die Hülse 10 etwas über die erste Spannebene 11 hinaus, d. h. um den Betrag, um welchen der Gummiring 13 in axialer Richtung gequetscht werden soll. Danach wird das erste Gehäuseteil 2 auf das zweite oder mittlere Gehäuseteil 3 aufgesetzt, der Schraubbolzen 5 wird durch die erste Durchgangsbohrung 6 und die Hülse 10 in die Stufenbohrung 7 eingeführt und mit seinem Gewindeabschnitt 5c in das Innengewinde 8a des dritten Gehäuseteils 4 eingeschraubt. Nachdem die Gehäuseteile 2, 3, 4 im Bereich der ersten und zweiten Schnittebene 11, 12 aufeinanderliegen und verspannt sind, ist der Gummiring 13 um einen definierten Betrag in axialer Richtung gequetscht, so dass er jetzt einen etwa ovalen Querschnitt aufweist. Damit kann der gequetschte Gummiring 13 seine Funktion als Dämpfungsglied bei Auftreten von Transversalschwingungen des Schraubenschaftes 5a ausüben. Die Transversal- oder Biegeschwingungen des Schraubenschaftes 5a werden in der Regel durch Schwingungen des Gehäuses 1, beispielsweise eines Getriebegehäuses angeregt.

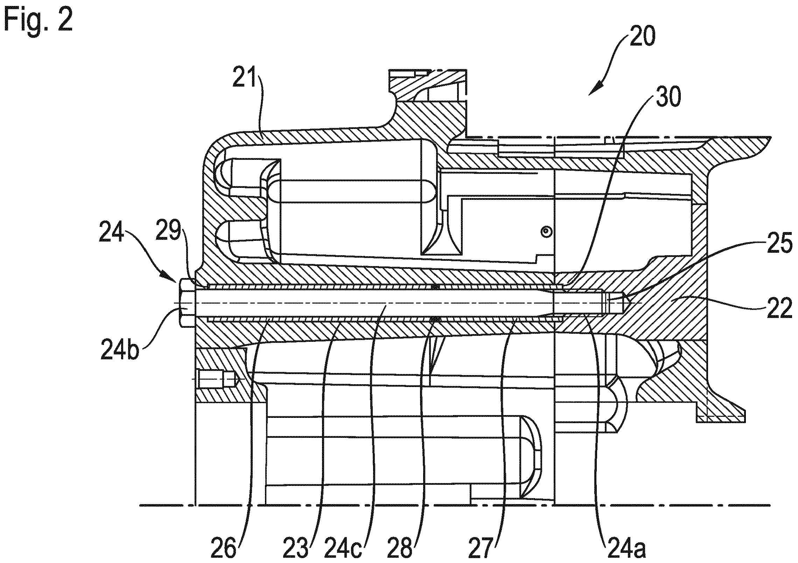

Fig. 2 zeigt ein zweites Ausführungsbeispiel der Erfindung mit einer Schraubenverbindung für ein Gehäuse 20, welches ein erstes Gehäuseteil 21, ein Deckelteil 21, und ein zweites Gehäuseteil 22, ein Bodenteil 22, umfasst. Das erste Gehäuseteil 21 weist eine Durchgangsbohrung 23 auf, welche von einem Schraubbolzen 24 oder Zuganker 24 durchsetzt wird. Das Ende des Schraubbolzens 24, welches ein Gewinde 24a aufweist, ist in ein Gewindesackloch 25 des zweiten Gehäuseteils 22 eingeschraubt. Der Schraubenkopf 24b liegt auf dem ersten Gehäuseteil 21 auf. Zwischen dem Schraubenschaft 24c und der Durchgangsbohrung 23 ist ein Ringspalt (ohne Bezugszahl) belassen, in welchen eine erste Hülse 26 und eine zweite Hülse 27 eingesetzt sind. Zwischen den einander zugekehrten Stirnflächen (ohne Bezugszahl) der ersten Hülse 26 und der zweiten Hülse 27 ist ein als Gummiring 28 ausgebildetes Dämpfungsglied 28 angeordnet und - analog zum ersten Ausführungsbeispiel - in axialer Richtung gequetscht. Die erste Hülse 26 stützt sich auf der dem Gummiring 28 abgewandten Seite gegenüber einem ersten Gehäuseabsatz 29 in der Durchgangsbohrung 23 ab, und die zweite Hülse 27 stützt sich auf ihrer dem Gummiring 28 abgewandten Seite gegenüber einem zweiten Gehäuseabsatz 30 im zweiten Gehäuseteil 22 ab. Wie aus der Zeichnung ersichtlich, ist der Gummiring 28 etwa in der Mitte zwischen dem ersten Gehäuseabsatz 29 und dem zweiten Gehäuseabsatz 30, also etwa auf halber Länge des Schraubenschaftes 24c angeordnet, weil hier die größte Amplitude bei Auftreten der Transversalschwingungen zu erwarten und daher die maximale Dämpfungswirkung erreichbar ist.

### Bezugszeichen

- 1: Gehäuse
- 2: erstes Gehäuseteil
- 3: zweites Gehäuseteil
- 4: drittes Gehäuseteil
- 5: Schraubbolzen/Zuganker
- 5a: Schraubenschaft
- 5b: Schraubenkopf
- 5c: Gewindeabschnitt
- 6: Durchgangsbohrung
- 7: Durchgangsbohrung/Stufenbohrung
- 7a: Absatz
- 7b: größerer Durchmesser
- 7c: kleinerer Durchmesser
- 8: Sackloch
- 8a: Innengewinde
- 9: Ringspalt
- 10: Hülse
- 10a: erste Stirnseite
- 10b: zweite Stirnseite
- 11: erste Spannstelle/Spannebene
- 12: zweite Spannstelle/Spannebene
- 13: Dämpfungsglied/Gummiring

- 20: Gehäuse
- 21: erstes Gehäuseteil
- 22: zweites Gehäuseteil
- 23: Durchgangsbohrung
- 24: Schraubbolzen/Zuganker
- 24a: Gewinde
- 24b: Schraubenkopf
- 24c: Schraubenschaft
- 25: Gewindesackloch
- 26: erste Hülse
- 27: zweite Hülse
- 28: Gummiring
- 29: erster Gehäuseabsatz
- 30: zweiter Gehäuseabsatz

- E: Einzelheit

## Patentansprüche

1. Gesamtheit, bestehend aus einer Anordnung zur Verbindung von mindestens zwei Gehäuseteilen (2, 3, 4; 21, 22) eines Gehäuses (1; 20) oder Bauteils mittels mindestens einer Schraube (5; 24), den mindestens zwei Gehäuseteilen, der mindestens einen Schraube und mindestens einem Dämpfungsglied, wobei mindestens ein Gehäuseteil (3; 21) eine Durchgangsbohrung (7; 23) und die mindestens eine Schraube (5; 24) einen Schraubenschaft (5a; 24c) aufweist, welcher die Durchgangsbohrung (7; 23) unter Belassung eines Ringspalts (9) durchsetzt, wobei im Bereich des Ringspalts (9) das ringförmige Dämpfungsglied (13; 28), welches einerseits mit dem Schraubenschaft (5a; 24c) und andererseits mit der Wandung der Durchgangsbohrung (7; 23) Kontakt hat, angeordnet ist, wobei die Durchgangsbohrung (7; 23) durch eine erste und eine zweite Spannstelle (11, 12) begrenzt ist, wobei das Dämpfungsglied (13; 28) etwa in der Mitte zwischen erster und zweiter Spannstelle (11, 12) angeordnet ist und wobei das Dämpfungsglied als Gummiring (13; 28) ausgebildet ist, **dadurch gekennzeichnet, dass** im Ringspalt (9) zwischen erster und zweiter Spannstelle (11, 12) mindestens eine Hülse (10; 26, 27) zur Positionierung des Dämpfungsgliedes (13; 28) angeordnet ist,
dass die Durchgangsbohrung (7) als Stufenbohrung (7) mit einem Absatz (7a) ausgebildet ist und dass das Dämpfungsglied (13) am Absatz (7a) anliegend angeordnet ist oder dass eine zweite Hülse vorgesehen ist und dass das Dämpfungsglied (13; 28) zwischen erster und zweiter Hülse (26, 27) oder zwischen dem Absatz (7a) und der mindestens einen Hülse (10) in axialer Richtung gequetscht ist.

## Claims

1. Collective structure comprising an arrangement for connecting at least two housing parts (2, 3, 4; 21, 22) of a housing (1; 20) or component by means of at least one screw (5; 24), also comprising the at least two housing parts, further comprising the at least one screw and additionally comprising at least one damping member, wherein at least one housing part (3; 21) has a through-bore (7; 23) and the at least one screw (5; 24) has a screw shank (5a; 24c), which passes through the through-bore (7; 23) with an annular gap (9) being left in the process, wherein the annular damping member (13; 28) is arranged in the region of the annular gap (9) and is in contact, on the one hand, with the screw shank (5a; 24c) and, on the other hand, with the wall of the through-bore (7; 23), wherein the through-bore (7; 23) is delimited by a first and a second clamping location (11, 12), wherein the damping member (13; 28) is arranged approximately in the centre between the first and second clamping locations (11, 12), and wherein the damping member is designed in the form of a rubber ring (13; 28), **characterized in that** at least one sleeve (10; 26, 27) is arranged in the annular gap (9), between the first and second clamping locations (11, 12), for the purpose of positioning the damping member (13; 28),
**in that** the through-bore (7) is designed in the form of a stepped bore (7) with a shoulder (7a) and **in that** the damping member (13) is arranged in abutment against the shoulder (7a),
or **in that** a second sleeve is provided and
**in that** the damping member (13; 28) is squeezed in the axial direction between the first and second sleeves (26, 27) or between the shoulder (7a) and the at least one sleeve (10).

## Revendications

1. Ensemble, constitué d'un dispositif de raccordement d'au moins deux parties de boîtier (2, 3, 4 ; 21, 22) d'un boîtier (1 ; 20) ou d'un composant au moyen d'au moins une vis (5 ; 24), des au moins deux parties de boîtier, de l'au moins une vis et d'au moins un organe d'amortissement, au moins une partie de boîtier (3 ; 21) présentant un alésage traversant (7 ; 23) et l'au moins une vis (5 ; 24) présentant une tige de vis (5a ; 24c), laquelle traverse l'alésage traversant (7 ; 23) en laissant un espace annulaire (9), l'organe d'amortissement annulaire (13 ; 28), lequel est en contact d'une part avec la tige de vis (5a ; 24c) et d'autre part avec la paroi de l'alésage traversant (7 ; 23), étant disposé dans la région de l'espace annulaire (9), l'alésage traversant (7 ; 23) étant délimité par un premier et un deuxième point de serrage (11, 12), l'organe d'amortissement (13 ; 28) étant disposé approximativement au centre entre le premier et le deuxième point de serrage (11, 12) et l'organe d'amortissement étant réalisé sous forme de bague en caoutchouc (13 ; 28), **caractérisé en ce qu'**au moins une douille (10 ; 26, 27) servant au positionnement de l'organe d'amortissement (13 ; 28) est disposée dans l'espace annulaire (9) entre le premier et le deuxième point de serrage (11, 12),
**en ce que** l'alésage traversant (7) est réalisé sous forme d'alésage étagé (7) présentant un épaulement (7a) et **en ce que** l'organe d'amortissement (13) est disposé en appui contre l'épaulement (7a) ou **en ce qu'**une deuxième douille est prévue
et **en ce que** l'organe d'amortissement (13 ; 28) est coincé dans la direction axiale entre la première et la deuxième douille (26, 27) ou entre l'épaulement (7a) et l'au moins une douille (10).
